# EUROPEAN PATENT SPECIFICATION

(11) **EP 2 494 737 B1**
(45) Date of publication and mention of the grant of the patent: **06.01.2016**
(21) Application number: 10827042.2
(22) Date of filing: 26.10.2010
(51) Int. Cl.: H02J 3/14, H04L 12/10, H04L 12/12, H04L 12/28, G01D 4/00, D06F 33/02

(54) **METHOD OF CONTROLLING NETWORK SYSTEM**
VERFAHREN ZUR STEUERUNG EINES NETZSYSTEMS
PROCÉDÉ DE CONTRÔLE D'UN SYSTÈME DE RÉSEAU

(30) Priority: 26.10.2009 KR 20090101942; 03.11.2009 KR 20090105636; 03.11.2009 KR 20090105635; 26.11.2009 KR 20090115202
(43) Date of publication of application: 05.09.2012
(73) Proprietor: LG Electronics Inc., Seoul 150-721 (KR)
(72) Inventor: KIM, Yanghwan, Seoul 153-802 (KR); LEE, Hoonbong, Seoul 153-802 (KR); LEE, Koonseok, Seoul 153-802 (KR); SEO, Munseok, Seoul 153-802 (KR); HWANG, Jinseong, Seoul 153-802 (KR); HU, Jinyul, Seoul 153-802 (KR); SIM, Sunghun, Seoul 153-802 (KR); MOON, Hyunwook, Seoul 153-802 (KR); KIM, Wansoo, Seoul 153-802 (KR); CHOI, Heungsik, Seoul 153-802 (KR); SEO, Daegeun, Seoul 153-802 (KR)
(74) Representative: Ter Meer Steinmeister & Partner
(86) International application number: PCT/KR2010/007359
(87) International publication number: WO 2011/052958

(56) References cited:
- EP-A1- 0 727 668
- EP-A1- 1 372 238
- EP-B1- 1 095 440
- CA-A1- 2 665 397
- DE-A1-102007 019 350
- US-A1- 2003 178 894
- US-A1- 2004 133 314
- NGAN H.W.: 'A Smart Grid Architecture for Supporting Open Access to Power Grids' IEEE 17TH CONFERENCE OF THE ELECTRICAL POWER SUPPLY 2008, XP003033157
- MOMOH JAMES A.: 'Smart Grid Design for Efficient and Flexible Power Network s Operation and Control' IEEE POWER SYSTEMS CONFERENCE AND EXPOSITION March 2009, XP031450641

## Description

### Technical Field

The present disclosure relates to a method of controlling a network system.

### Background Art

Electric products operate while consuming electric energy. Since electric products consume electric energy, the amount of electricity consumption or electric rates may be a sensitive matter to users.

As energy consumption increases, it is necessary to develop more energy sources and generate electric energy. However, electricity generation causes generation of a large amount of greenhouse gas and environmental problems such as global warming. To reduce emission of greenhouse gas, particularly, carbon dioxide, alternative energy sources have been developed such as wind power, solar light, solar heat, geothermal power, tidal power, and water power as well as nuclear power and fuel cells.

Along with this, a smart grid has been proposed as the next generation power grid to improve energy efficiency by realizing two-way and real-time information exchange between power providers and consumers in a way of applying information technology (IT) to the existing power grid.

US 2003/178894 A1 describes an energy management system for an appliance comprising an interface to receive a schedule having an off-peak time segment and an on-peak time segment, a control to determine an operation to be performed by the appliance, a mode selecting device to select between an energy management mode and an immediate start mode and a controller connected to the interface, the control and the mode selecting device. The controller is arranged such that upon selection of the energy management mode, the controller initiates the operation only when a current time is within the off-peak time segment and upon selection of the immediate start mode, the controller initiates the operation immediately.

CA 2665 397 A1 relates to a method for coordinating over a network a supply of power from power generator resources and demand for that power.

EP 0 727 668 A1 describes a method for the management of the energy consumption in a domestic ambient, in which a plurality of electric loads is installed, among which household appliances are equipped with an electronic control system. According to the known method, the management of the electric energy consumption is realized by the ensemble of the suitably programmed control systems of each of said electric appliances, which use to this purpose the information relating to the instantaneous total consumption of the electric energy in the domestic ambient. Said information is made available to said control systems through a suitable communication bus by a measuring device, which is external to the household appliances.

EP 1 372 238 A1 relates to a system that facilitates and implements energy savings decisions by a home owner. The system will increase the energy and cost efficiency of an energy supply network by providing a mechanism to reduce the peak level of energy demand. A controller in logical communication with energy consuming appliances responds to request for energy from energy consuming appliances and devices by permitting or curtailing energy supply to the appliances or devices based on evaluation of a plurality of logical considerations. The controller may be operated to provide energy to fewer than all of the energy requesting appliances to reduce the energy demand on an energy supply source, including the instantaneous peak demand.

US 2004/133314 A1 describes a system and method for managing delivery of energy from a distribution network to one or more sites. Each site has at least one device coupled to the distribution network. The at least one device controllably consumes energy. The system includes a node and a control system. The node is coupled to the at least one device for sensing and controlling energy delivered to the device. A control system is coupled to the node and distribution network for delivering to the node at least one characteristic of the distribution network. The node controls the supply of energy to the device as a function of the at least one characteristic.

DE 10 2007 019350 A1 discloses an apparatus to optimize the energy consumption of a consumer.

### Disclosure of Invention

### Technical Problem

Embodiments provide a method of controlling a network system in which a power management for efficiently consuming an electric power is possible.

### Solution to Problem

This technical problem is solved by the features of the independent claims. In one embodiment, a method of controlling a network system includes: recognizing power information comprising a peak time period and an operation time period of an energy consumption component; and changing the operation time period when the peak time period is included in at least portion of the operation time period of the energy consumption component.

### Advantageous Effects of Invention

According to the proposed embodiments, since the power information is identified to perform the power saving operation in the peak time period, the electricity charge may be reduced.

Also, since the power information is outputted through the output unit, the user may easily confirm the power states.

### Brief Description of Drawings

Fig. 1 is a schematic view of an intellectual power supply network system according to an embodiment.
Fig. 2 is a schematic view of a house area network according to an embodiment.
Fig. 3 is a block diagram of a power-manageable electric product according to an embodiment.
Fig. 4 is a schematic flowchart for explaining a process of controlling a power using a power information management unit within the electric product according to an embodiment.
Fig. 5 is a perspective view of a washing machine that is one example of the electric product according to an embodiment.
Fig. 6 is a schematic block diagram illustrating a constitution of the washing machine of Fig. 5.
Fig. 7 is a screen illustrating an example of an output unit of Fig. 6.
Fig. 8 is a flowchart illustrating a process of controlling a washing machine according to a first embodiment.
Fig. 9 is a flowchart illustrating a process of controlling a washing machine according to a second embodiment.
Figs. 10 and 11 are flowcharts explaining a process in which a washing machine is operated in a power saving mode according to an embodiment.
Fig. 12 is a block diagram of a refrigerator that is another example of the electric product according to an embodiment.
Figs. 13 to 15 are views for explaining a process in which a refrigerator performs a defrosting operation in a power saving mode according to a first embodiment.
Fig. 16 is a flowchart for explaining a process of controlling the refrigerator according to the first embodiment.
Fig. 17 is a view for explaining a first example of a process of operating the refrigerator in the power saving mode.
Fig. 18 is a view for explaining a second example of the process of operating the refrigerator in the power saving mode.
Fig. 19 is a view for explaining a third example of the process of operating the refrigerator in the power saving mode.
Figs. 20 to 22 are views for explaining a process in which a refrigerator performs a defrosting operating in a power saving mode according to a second embodiment.
Fig. 23 is a view for explaining a fourth example of the process of operating the refrigerator in the power saving mode.
Fig. 24 is a view for explaining a fifth example of the process of operating the refrigerator in the power saving mode.

### Mode for the Invention

Reference will now be made in detail to the embodiments of the present disclosure, examples of which are illustrated in the accompanying drawings. The idea of the present disclosure may include an embodiment derived from a combination of two or more embodiments as well as each of the embodiments.

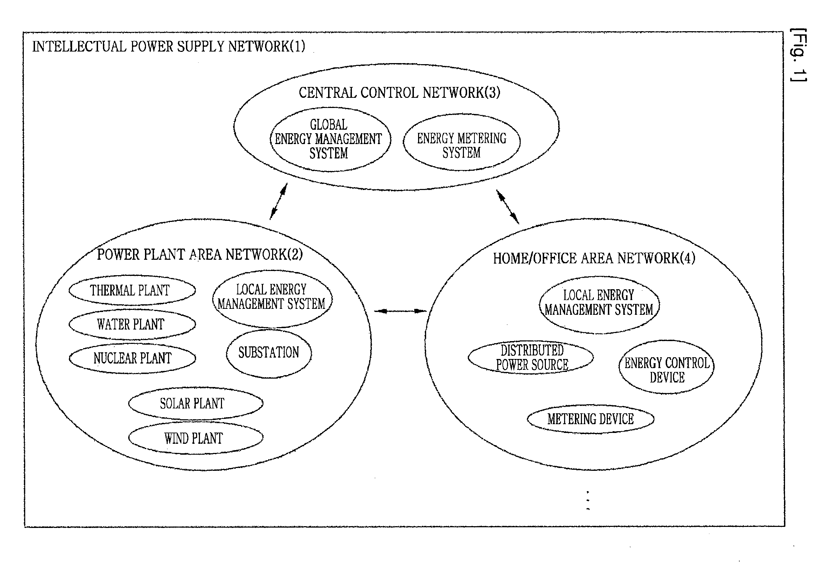

Fig. 1 is a schematic view of an intellectual power supply network system according to an embodiment.

Referring to Fig. 1, an intellectual power supply network 1 may include at least one local area network or at least one global area network.

For example, the local area network may include a power plant area network 2 capable of sharing power information between power plants, a home area network 4 capable of sharing power information between electric appliances within a house, an office area network 4 capable of sharing power information between electric appliances within an office, or a central control network 3 capable of controlling power information between local areas. The global area network may represent a network including at least two or more local area networks. Also, the global area network may be understood as a relative concept corresponding to the local area network.

As one example of the intellectual power supply network 1 applied to the present disclosure, the intellectual power supply network 1 may include the power plant area network 2, the central control network 3, and at least one home/office area network 4.

The power plant area network 2 may include a power plant generating an electric power through thermal power generation, nuclear power generation, or water power generation and solar and wind power plants, which respectively use renewable solar energy and wind power. An electric power generated in a thermal power plant, a nuclear power plant, or a water power plant is supplied into a substation through a power line, and the substation converts voltage or current properties to distribute the converted electric power into consumers within the home/office area network. Also, the electric power generated using the renewable energy is supplied into the substation, and then is distributed into each of the consumers.

In case of the home area network 4, residential customers may produce electricity by itself using a solar battery or fuel cell of a plug in hybrid electric vehicle (PHEV) for their consumption, and the remaining electricity may be supplied or sold into the other local area network. Also, an energy metering device may be provided in each of local area networks to check an electric power consumed for each of the consumers or electricity bills in real time, and thus a power supply unit within the local area networks may recognize the present power consumption amount and electricity charge to take action for reducing power consumption or electricity costs based on the real-time information about the power consumption and electricity charge.

Also, two-way communication may be possible between the local area networks or units within the local area networks. In addition, the two-way communication may be possible between a unit within one local area network and a unit within the other local area network. Here, the unit may include a power plant, an electric company, a distributed power source, an energy management system, an energy metering system, an intellectual device, or an electric device. For example, the two-way communication may be possible between the power plant area network 2 and the home area network 4, and also between electric appliances within the home area network. Or, the two-way communication may be possible between the power plant within the power plant area network 2 and the energy management system within the home area network. Thus, the power consumption of each of the consumers may be monitored and managed to adequately product and distribute electricity.

The intellectual power supply network may include the energy management system (EMS). Here, the EMS represents a system for managing an energy control device using an energy management program. For example, the energy control device may include an automatic temperature control device, a cable set-top box, an intellectual display device, or an automatic lighting control device. The energy management system may manage power consumption of each of consumers in real time through the communication with the energy control device. In addition, power requirement may be estimated in real time, based on accumulated data. The energy management system may be provided to each of consumers or suppliers. Furthermore, the energy management system may be provided to each of the local area networks or global area networks.

Also, the intellectual power supply network may include an energy metering system. The energy metering system represents a system for measuring energy consumption from metering devices and collecting information with respect to the energy consumption to analyze the collected information. For example, the metering devices may include an electricity meters, gas meters, or water meters.

The energy management system and the energy metering system may allow a consumer to efficiently use electricity and allow a power supplier to confirm system errors, thereby efficiently operating the system.

For example, real-time price information of power market is relayed through the energy management system. Also, the energy management system communicates with each electric device to control the electric device. The user recognizes power information of each of the electric devices through the energy management system to process power information such as the power consumption or electricity rate limitation set-up, based on the recognized power information, thereby reducing energy and costs.

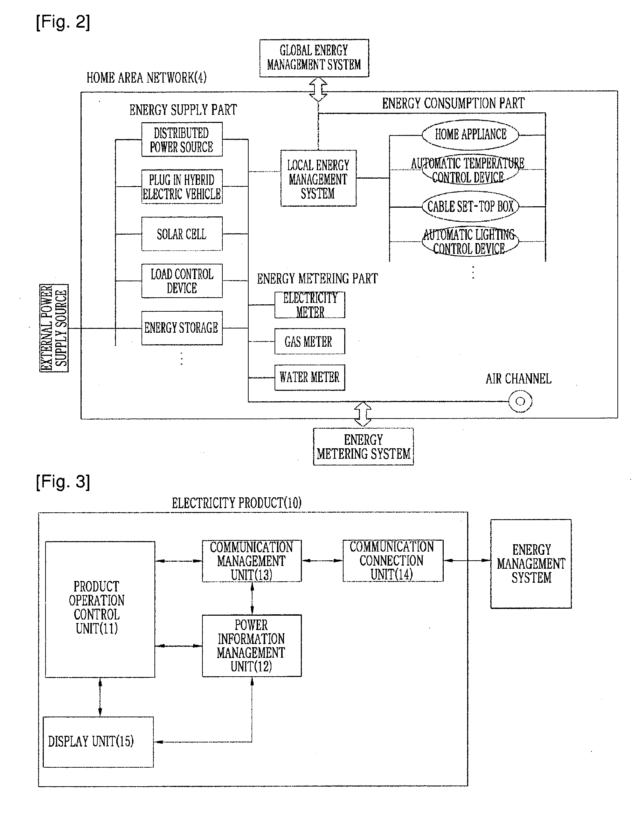

Fig. 2 is a schematic view of a house area network according to an embodiment.

Referring to Fig. 2, the house area network 4 may correspond to one local area network within an intellectual power supply network. The home area network 4 may mutually communicate with the other local area network within the intellectual power supply network. Also, the home area network 4 may independently perform energy supply, consumption, storage, measurement, management, and communication. The home area network 4 may largely include an energy supply part, an energy consumption part, an energy metering part, and a local energy management system. Also, the home area network 4 may receive information for a general management of units therein through air channels. For example, the information receivable through the air channels may include a unit identifier, the present electricity charge information, relative level information of the present charge (e.g., high, middle, low), use information (e.g., residential, commercial), and error confirmation information (e.g., CRC information). A module for receiving broadcasting signals may include a digital multimedia broadcasting-terrestrial (DMB-T), a digital multimedia broadcasting-satellite (DMB-S), a media forward link only (mediaFLO), a digital video broadcast-handheld (DVB-H), and an integrated services digital broadcast-terrestrial (ISDB-T).

The information obtained from the energy metering part may be transmitted into an external energy metering system, and the information obtained from the local energy management system may be transmitted into an external global energy management system or the other local energy management system.

The energy supply part may supply an electric power to the whole units within the home area network 4. The energy supply part may include a distributed power source, a plug in hybrid electric vehicle (PHEV), a solar cell, a load control device, and an energy storage. The distributed power source may represent the other power source except a power source supplied from the existing power plant, for example, a power source supplied from the other local area network or a self-powered supply source (plug in hybrid electric vehicle, solar cell). The distributed power source, the plug in hybrid electric vehicle, and the solar cell may produce and store electricity by oneself and provide the produced electricity to the other local area network. The load control device controls the devices by which the electricity is consumed within the home area network 4. The energy storage stores energy supplied from the external power supply source. Also, as necessary, the energy storage distributes the energy into the units within the home area network 4.

The energy consumption part consumes the energy supplied from the energy supply part, based on a command transmitted from the local energy management system. The energy consumption part may include a home appliance, an automatic temperature control device, a cable set-top box, and an automatic lighting control device.

The energy metering part is connected to the energy supply part or the energy consumption part to measure energy consumption and collect information with respect to the energy consumption, thereby analyzing the collected information. The energy metering part may include an electricity meter, a gas meter, and a water meter. The information obtained from the energy metering part may be transmitted into the energy metering system.

The whole units within the home area network may mutually communicate with each other. Also, each of the units may include a controller or an energy management program.

Fig. 3 is a block diagram of a power-manageable electric product according to an embodiment.

Referring to Fig. 3, an electric product 10 includes a product operation control unit 11, a power information management unit 12, a communication management unit 13, a communication connection unit 14, and a display unit 15. When the units are realized in an actual application, as necessary, two or more units may be combined into one unit, or one unit may be divided into two or more units. For example, the power information management unit 12, the communication management unit 13, and the communication connection unit 14 may be separately provided and included in the electric product 10. Hereinafter, the units will be described in order.

The product operation control unit 11 controls overall operations of the electric product 10. For example, the product operation control unit 11 controls an operation of each unit of the electric product 10 according to a product operation command transmitted from the power information management unit 12 to perform functions of the electric product 10. Also, the product operation control unit 11 may control operations of the power information management unit 12, the communication management unit 13, and the display unit 15 according to information inputted by a user.

The power information management unit 12 processes and manages the power information received from the communication management unit 13. For example, the power information management unit 12 identifies electricity rate information of data received from the communication management unit 13 to transmit a product operation command for reducing the power consumption of the electric product based on the electricity rate information into the production operation control unit 11. The power information management unit 12 may be provided as a power information management module within the product operation control unit 11. For example, the power information management module may be provided as a hardware within the product operation control unit 11 or have a software separated from the product operation control unit 11.

Here, the electricity information may include the present or future power condition (e.g., power consumption or power rate condition per time), power quality conditions (e.g., frequency, neutralizing voltage, and high-frequency conditions), environment conditions (e.g., intensities of temperature, moisture, movement, wind, and light), accumulated power consumption costs, instantaneous power consumption costs, power consumption costs per time, energy costs for time-of-use energy rates, costs for critical peak pricing, costs for capacity billing rates, costs for demanded factors (e.g., tax, rental fee, and discount), power consumption costs for parameters defined by the user, power consumption costs for critical history, power productivity/consumption for critical history, or environmental influence information (e.g., carbon dioxide discharge amount, and carbon dioxide discharge estimation amount).

The power information may be processed within the power information management unit 12 to transmit the processed power information into other units within the global area network or the local area network through the communication management unit 13 and the communication connection unit 14 or may be outputted through the display unit 15.

The communication management unit 13 has a proper identification number of the electric product 10. Also, the communication management unit 13 manages data transmitted/received through the communication connection unit14. For example, the communication management unit 13 may transmit power consumption information of the electric product within the home area network into the local energy management system or the global energy management system through the communication connection unit 14 and receive power consumption information from the other electric products within the home area network or the power plant area network.

The communication connection unit 14 may serve as an interface that can mutually communicate with the whole units within the global area network or the local area network. The communication connection unit 14 may include a broadcast receiving module, a mobile communication module, a wireless internet module, a near filed communication module, and a global positioning system (GPS). The broadcast receiving module receives broadcasting signals and/or broadcasting-related information from an external broadcast management server through broadcasting channels. For example, the electric product 10 may receive power consumption information, power supply information, or power management information of the other units within the global area network or the local area network as a signal form.

The display unit 15 may include a sound output module and an alarm output module. Also, the display unit 15 displays power information processed by the power information management unit 12 and/or condition information of the electric product. Examples of the power information were previously described in the descriptions with respect to the power information management unit 12.

In case of a touch screen having a mutually layered structure of the display unit 15 and a touch pad, the display unit 15 may be used as an input unit in addition to an output unit. The display unit 15 may include at least one of a liquid crystal display, a thin film transistor-liquid crystal display, an organic light-emitting diode, a flexible display, and a three-dimensional (3D) display. Also, two or more display units may be provided according to a realized configuration of the electric product 10. For example, the electric product 10 may include an external display module (not shown) together with an internal display module (not shown).

The sound output module outputs audio data received from the communication connection unit 14 in a signal reception, a speech recognition mode, and a broadcast receiving mode. Also, the sound output module outputs sound signals related to functions (e.g., power information receiving sound, event message receiving sound, and product operation status sound) performed in the electric product 10. The sound output module may include a speaker, a buzzer, etc.

The alarm output module outputs a signal for alarming event occurrence of the electric product 10. Examples of events occurring in the electric product 10 may include signal reception, message reception for informing charge limitation excess, etc. The alarm output module may output the signal as a vibration form. When the signal or message is received, the alarm output module may be vibrated to inform the reception of the signal or message. The user may recognize the event occurrence through the vibration. Alternatively, the signal for informing the event occurrence may be outputted through the display unit 15 or the sound output module.

The electric product 10 may be provided in a portable terminal form or a plug device form. In case of the portable terminal form, the electric product 10 may have various types such as a folder type, a swing type, and a slide type.

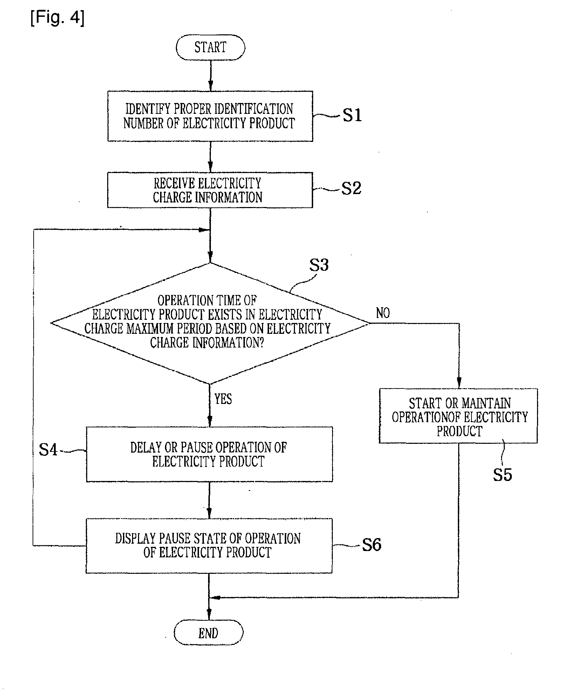

Fig. 4 is a schematic flowchart for explaining a process of controlling a power using a power information management unit within the electric product according to an embodiment.

Referring to Figs. 3 and 4, the communication management unit 13 may recognize proper identification information of the electric product in operation S1. The power information management unit 12 may recognize electricity charge information of data received from the communication management unit 13 in operation S2 and transmit a product operation command for reducing power consumption of the electric product, based on the electricity charge information, into the product operation control unit 11. In operation S3, the power information management unit 12 may confirm whether an operation time period of the electric product (energy consumption component) is within a peak time period according to the electricity charge information. The peak time period represents a time period in which a cost is expensive than that of a normal time period. The normal time period and peak time period may be determined by a reference value. The peak time period may be a time period in which the electricity charge is above the reference value, and the normal time period may be a time period in which the electricity charge is below the reference value.

As a confirmed result, when the operation time of the electric product is within the peak time period (at least portion of the operation time period partially overlaps with the peak time period, the power information management unit 12 transmits a product operation command for delaying or temporarily pausing an operation of the electric product into the product operation control unit 11. Thus, in operation S4, the product operation control unit 14 delays or temporarily pauses the operation of the electric product according to the product operation command. Then, in operation S6, the temporary pause of the operation of the electric product is displayed through the display unit 15. The display unit 15 displays information with respect to an operation time changed according to the delay or pause of the operation of the electric product. When the operation of the electric product is in the temporary pause state, the operation of the electric product is continuously performed to confirm whether the operation time period of the electric product deviates from the peak time period.

On the other hand, when at least portion of the operation time period of the electric product overlaps with the peak time period, an operation starting time of the electric product is put forward to operate the electric product.

However, as a confirmed result, when the operation time of the electric product is not within the peak time period, the operation of the electric product is continuously maintained or the electric product is re-operated in operation S5. That is, according to the present embodiment, when at least portion of the peak time period is included in the entire operation time period of the electric product, the total operation time is maintained, but the entire operation time period is changed.

Here, when the operation of the electric product is temporarily paused or the electric product is re-operated, the display unit 15 may include the sound output module for outputting the temporary pause or re-operation condition using sound.

Also, the communication management unit 13 further receives power supply information from an external device, and the power information management unit 12 compares the power supply information to estimated power consumption to transmit a product operation command for reducing the power consumption of the electric product into the product operation control unit. Here, when the estimated power consumption is greater than the power supply information, the power information management unit 12 may transmit the product operation command for temporarily pausing the operation of the electric product into the product operation control unit 11, and the power supply information shows power supply information in which the electricity charge information is lowest.

The above-described method of controlling the power, which is applied to the present disclosure, may be programmed as a program that is executed in a computer, and then may be stored in a computer-readable recording medium. Also, data having a data structure according to the present disclosure may be stored in the computer-readable recording medium. The computer-readable recording medium includes various storage devices in which computer-readable data is stored. Examples of the computer-readable recording medium include a ROM, a RAM, a CD-ROM, a magnetic tape, a floppy disk, and an optical storage device. In addition, the computer-readable recording medium may include a wavelength realized in a carrier wave form (e.g., transmission through an internet). Also, a bit stream generated by the energy management method applied to the present disclosure may be stored in the computer-readable recording medium or transmitted through wire/wireless communication network.

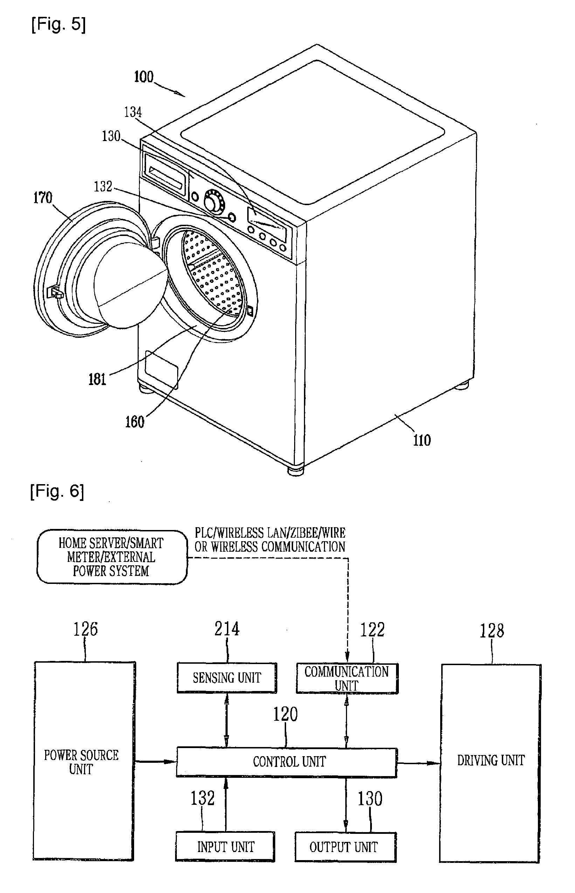

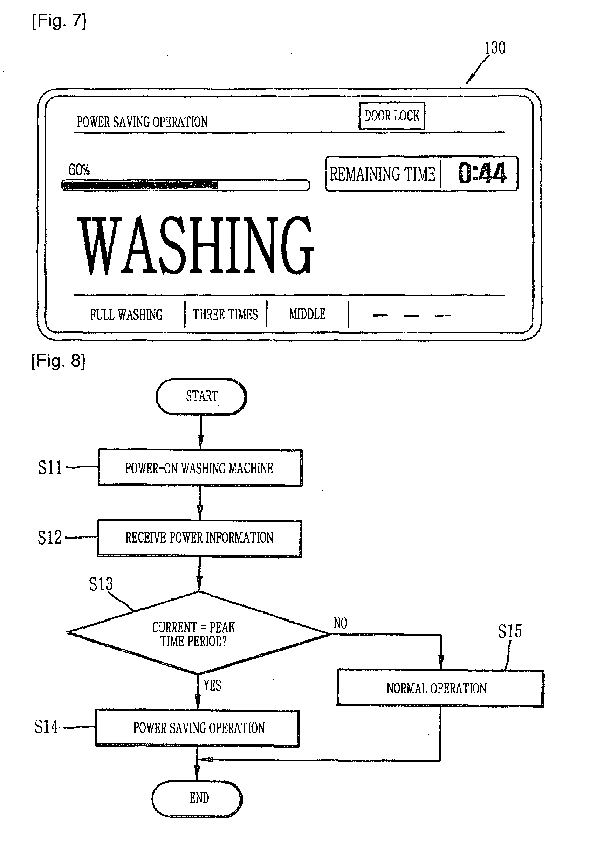

Fig. 5 is a perspective view of a washing machine that is one example of the electric product according to an embodiment. Fig. 6 is a schematic block diagram illustrating a constitution of the washing machine of Fig. 5. Fig. 7 is a screen illustrating an example of an output unit of Fig. 6.

Although a drum washing machine is described as an example in Fig. 5, a washing machine is not limited to their kinds. Also, the present disclosure may be identically applicable to dryers and other clothing treatment devices.

Referring to Figs. 5 to 7, a washing machine 100 according to the present embodiment includes a cabinet 110 provided with an insertion hole 181 allowing access of a laundry, a door 170 for opening and closing the insertion hole 181, a drum 160 rotatably disposed inside the cabinet 110 to receive the laundry, and a control panel 130 disposed on an upper side of the cabinet 110.

The control panel 130 includes an output unit 130 for displaying various information containing use information of the washing machine 100 and an input unit 132 for receiving information inputted by a user or manager.

Also, the washing machine 100 a communication unit 122 connected to an external device through wire/wireless communication to receive power information and a control unit 120 controlling an operation of the washing machine based on the operation mode and the power information.

Here, the power information includes information with respect to a normal time period and a peak time period. A higher electricity price is charged within the peak time period than within the normal time period. A time period when a total power usage amount increases and a remaining power to be supplied to each residential customer decreases to a predetermined value or less is set as a peak time period by a power provider, based on a statistic material or through a real time observation. Thus, the power provider may adjust the using of power by charging a high electricity price in the peak time period. The normal time period is a time period except for the peak time period. Information about the peak time period may be stored in advance in the external device, that is, at least one of an external power system and an in-house power related device such as a home server and a smart meter. The power provider may provide information about the peak time period in real time. As another example, the control unit 120 may determine the peak time period and the normal time period by comparing electricity charge information to a reference value.

The communication unit 122 is connected to the external device through a wire/ wireless communication method to receive the power information. The wire/wireless communication method may any communication method for data transmission such as a power line communication, wireless LAN, Internet, Zigbee, and a serial communication. Also, the communication unit 122 may transmit information such as a power demand amount of the washing machine, an electricity charge, and a greenhouse gas emission amount to the outside through the wire/wireless communication method.

The user may set an operation mode through the input unit 132. The operation mode includes a normal operation and a power saving operation mode. When the received power information is the normal time period, the control unit 120 operates the washing machine in the normal operation mode. When the received power information is the peak time period, the control unit 120 operates the washing machine according to the set operation mode. That is, if the washing machine is set to the normal operation mode by the user, even though power information that is the peak time period is received, the washing machine performs the process in the normal operation mode. On the contrary, if the washing machine is set to the power saving operation mode by the user, when power information that is the peak time period is received, the washing machine performs the process in the power saving operation mode. The operation mode may be automatically switched according to an arbitrary condition.

Also, the washing machine further includes a power source unit 126 connected to an external power source to supply a power into the washing machine, a sensing unit 124 sensing state information of the washing machine including a laundry amount and a water supply temperature, an output unit 130 displaying am operation mode and process (or course), which is currently operated or inputted by an input unit 132, and a driving unit 128 for driving a motor, a heater, and a fan according to control signals of the control unit 120.

The power source unit 126 receives an external power, that is, commercial alternating current (AC) power to output a direct current (DC) voltage for driving circuits and units constituting the washing machine. A switched-mode power supply (SMPS) is used as the power source unit 126. As a matter of course, other power conversion devices may be used than the SMPS. The SMPS rectifies and smoothes an AC voltage of the external power to convert the AC voltage into a DC voltage and uses a transforming unit such as a high frequency transformer and a regulator to covert the DC voltage into driving voltages for the washing machine.

The sensing unit 124 senses a laundry amount and a water supply temperature and transmits information of the sensed laundry amount and temperature to the control unit 120. The control unit 120 may calculate estimated power consumption and an estimated electricity charge of the washing machine, based on one of the set process and the sensed laundry amount and water supply temperature. The sensing unit 124 senses various types of state information for performing a normal process of the washing machine, and may include a sensor for sensing a water level, a sensor for sensing a rinsing degree, a sensor for sensing a laundry leaning amount, and a sensor for sensing a vibration amount of the washing machine.

Also, the sensing unit 124 transmits information sensed by the sensors to the control unit 120.

As shown in Fig. 7, the output unit 130 displays an operation mode inputted through the input unit 132 and a process to be performed in the washing machine or displays the currently operating mode and process, a remaining time, and an operation progression degree. Also, the output unit 130 displays changed operation time period information when the operation time period of the washing machine is changed.

The driving unit 128 receives a driving signal from the control unit 120 to drive loads for performing separate processes. The loads include the motor for rotating a washing drum, a heater for heating water supplied for boiling a laundry, a heater for providing steam, a heater for heating air to dry a laundry, and a fan and a fan motor for generating an air flow during the drying of a laundry.

Fig. 8 is a flowchart illustrating a process of controlling a washing machine according to a first embodiment.

Referring to Fig. 8, a power is applied to the washing machine to use the washing machine in operation 11. Then, a process to be performed in the washing machine is inputted. In operation S12, the washing machine receives power information including electricity charge information from an external device.

Thereafter, in operation S 13, the washing machine determines whether the current time is a peak time period based on the received power information.

If the current time is within the peak time period, the washing machine performs the process in the power saving mode in operation 14. Also, if the current time is the normal time period, the washing machine performs the process in the normal operation mode in operation S 15.

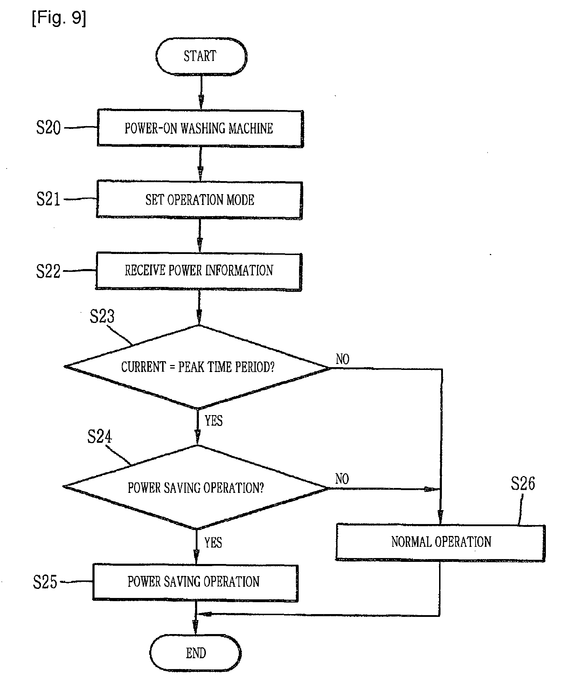

Fig. 9 is a flowchart illustrating a process of controlling a washing machine according to a second embodiment.

Referring to Fig. 9, a power is applied to the washing machine to use the washing machine in operation 20. Then, in operation S21, a process to be performed in the washing machine and an operation mode (a normal mode or a power saving mode) are inputted. In operation S22, the washing machine receives power information including electricity charge information from an external device.

Thereafter, in operation S23, the washing machine determines whether the current time is a peak time period based on the received power information.

If the current time is within the peak time period, the washing machine determines whether the set operation mode is the power saving mode in operation S24. If the power saving mode is set, the washing machine performs the process in the power saving mode in operation S25. On the other hand, as a result determined in operation S24, when the normal operation mode is set, the washing machine performs the process in the normal operation mode in operation S26.

As a result determined in operation S23, when the current time is not within the peak time period, the washing machine performs the process in the normal operation mode in operation S26.

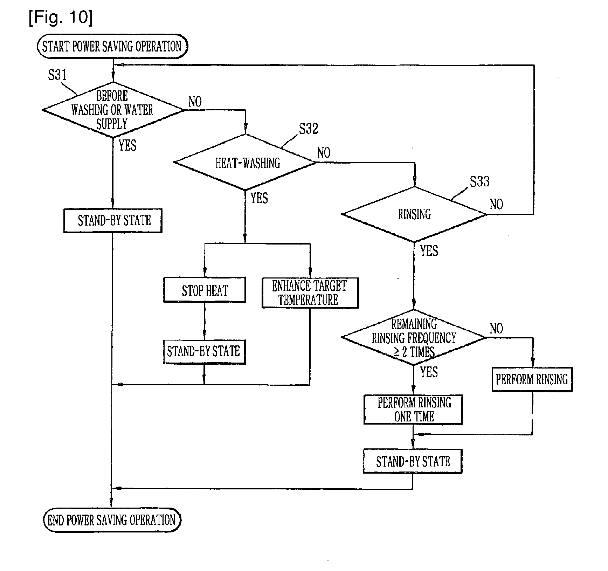

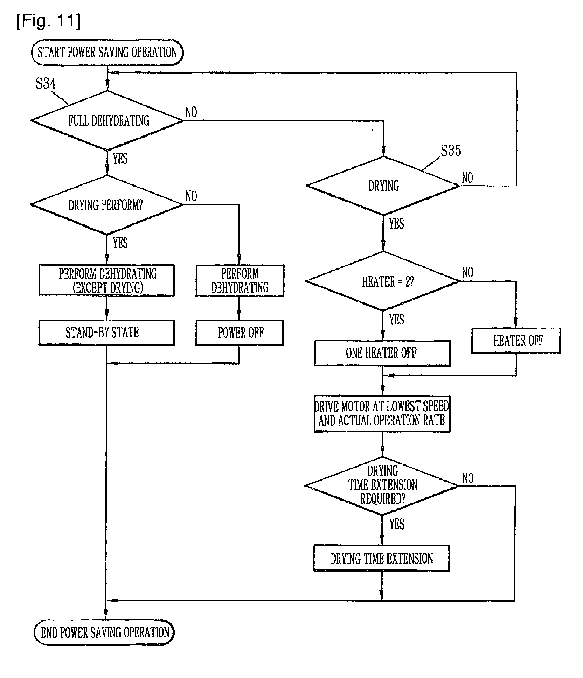

Figs. 10 and 11 are flowcharts explaining a process in which a washing machine is operated in a power saving mode according to an embodiment.

Referring to Figs. 10 and 11, when the power saving mode is set by a user and the communication unit 122 receives the power information that is the peak time period, the washing machine determines whether what process is performed during the information reception to perform a process according to the determined result. If a time point, at which the power information is received, of the washing machine is before a washing process start or a water supply process in operation S31, the washing machine stops the process performance to delay the process performance up to a time point at which the peak time period is ended or a time period at which the power information that is the normal time period is received.

If a heat washing process is being performed in operation S32 at the time point at which the power information is received, the washing machine stops a heating process to delay the heating process up to the time point at which the peak time period is ended.

As another example, if the heat washing process is being performed in operation S32 at the time point at which the power information is received, a heating target temperature is lowered to reduce a use of the heater, thereby reducing power consumption.

If a rinsing process is being performed in operation S33 at the time point at which the power information is received, the washing machine performs the rinsing process, and then delays the rinsing process up to the time period at which the peak time period is ended. Of cause, the washing machine may perform the rinsing process in the power saving mode due to lower power consumption even though the performance of the rinsing process is stopped.

If a full dehydrating process including a drying process is being performed in operation S34 at the time point at which the power information is received, the washing machine stops the drying process and performs only the dehydrating process, or delays the dehydrating process up to the time point at which the peak time period is ended. If a full dehydrating process, which does not include the drying process is being performed in operation S34 at the time point at which the power information is received, the dehydrating process is completed, and then, the power applied to the washing machine is interrupted.

If the drying process is being performed in operation S35 at the time point at which the power information is received, the washing machine stops an operation of the heater to operate the motor for rotating the drum at a lowest speed and an actual operation rate. In case where two or more heaters are provided, the heaters may be stopped in order or the whole heaters may be stopped at the same time.

The power information according to the present disclosure may further include a kind of external power source and a greenhouse gas index depending on the kind of external power source. Here, washing machine may calculate estimated power consumption and a greenhouse gas emission amount, based on the power information. Thus, at least one data of the kind of external power source, the greenhouse gas index, and the greenhouse gas emission amount may be outputted through the output unit.

Also, the washing machine may calculate an estimated greenhouse gas emission amount of an energy source supplied into the washing machine, based on the calculated estimation power consumption. For example, a carbon dioxide index depending on the energy source may be multiplied by the calculated estimation power consumption to obtain an estimated discharge amount of carbon dioxide. Here, the energy source may include fossil fuels such as oil and gas, alternative energy sources such as solar light, solar heat, wind power, tidal power, water power, and geothermal power, nuclear power and fuel cells. The greenhouse gas index depending on each energy source, for example, the carbon dioxide index may be set through experiments.

According to the present disclosure, the power is applied to the washing machine and the information with respect to the current electricity charge time period is received from the external device through the communication unit to provide the information to a user through the output unit. Therefore, the user may select reasonable method for saving the power. Also, the washing machine may be performed in the power saving mode against the peak time period to reduce the electricity charge.

Also, according to the present disclosure, the kind of external power source and the greenhouse gas index depending on the kind of external power source may be received to calculate the estimated electricity cost and the greenhouse gas emission amount, based on the kind of external power source and the greenhouse gas index. Thus, the user may save the power.

That is, in the washing machine according to the present disclosure, the user may confirm the reality of power usage and electricity usage in real time to induce voluntary energy conservation. Thus, the peak power may be reduced at the national level to contribute to a build of a next generation power network.

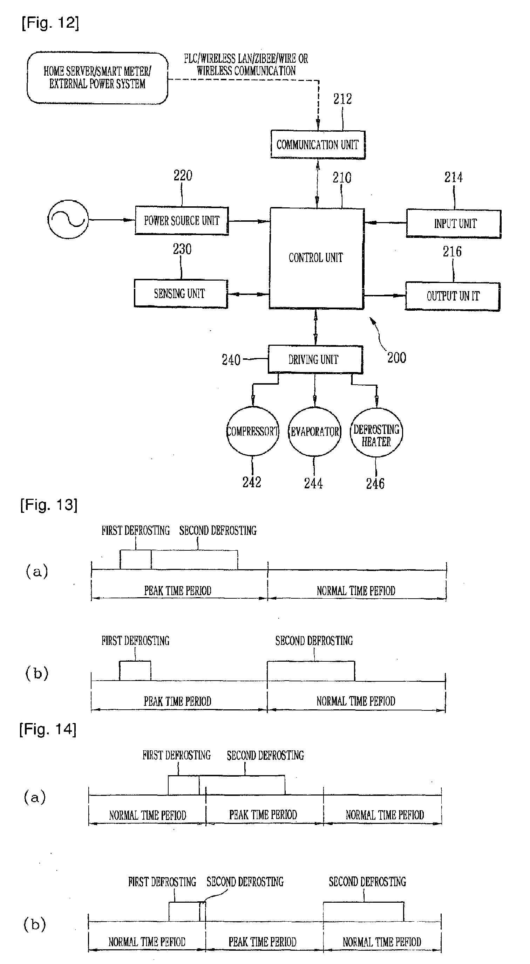

Fig. 12 is a block diagram of a refrigerator that is another example of the electric product according to an embodiment.

Referring to Fig. 12, a refrigerator 200 according to the present disclosure includes an input unit 214 receiving an operation mode of the refrigerator 200, a communication unit 212 connected to an external device through a wire/wireless communication method to receive power information, and a control unit 210 driving the refrigerator 200 based on the operation mode and the power information.

Also, the refrigerator 200 may include a power source unit 220 connected to an external power source to supply a power into the refrigerator 200, a detection unit 230 for detecting a plurality of states inside and outside the refrigerator 200, an operation mode inputted through the input unit 214, an output unit 216 displaying at least one of the received power information and the plurality of detected states, and a driving unit 240 driving a compressor 242, an evaporator 244, and a deforesting heater 246 (energy consumption components) according a control signal of the control unit 210.

Here, the power information includes electricity charge time period information with respect to a normal time period and a peak time period.

The communication unit 212 is connected to the external device through a wire/ wireless communication method to receive the power information. The communication method of the communication unit is equal to the above-described method.

A user may set the operation mode through the input unit 214. The operation mode includes a normal operation mode and a power saving operation mode.

The power source unit 220 receives the external power source, i.e., commercial AC power to output an AC voltage for driving the circuits and units constituting the refrigerator and a refrigerator control device.

The detection unit 230 may include at least one refrigerator inside-temperature detection unit (not shown) for detecting a temperature within at least one storage space provided in the refrigerator. The refrigerator inside-temperature detection unit includes a refrigerating chamber temperature detection unit for detecting a temperature within a refrigerating chamber and a freezing chamber temperature detection unit for detecting a temperature within a freezing chamber.

Also, when a plurality of refrigerating and freezing chambers is provided, a plurality of refrigerator inside-temperature detection units may be installed in each of the refrigerating and freezing chambers. Also, the plurality of refrigerator inside-temperature detection units may be installed in the refrigerating chamber or the freezing chamber. The detection unit 230 may further include a refrigerator outside-temperature detection unit (not shown) for detecting a temperature outside the refrigerator, i.e., an indoor temperature.

The output unit 216 displays at least one information of the operation mode inputted through the input unit 214, the power information received through the communication unit 212, and the plurality of states detected through the detection unit 230. When display devices such as a liquid crystal display (LCD), an organic light emitting diodes (OLED), etc. are used as the output unit 216, the output unit 216 may display a color change of each of the display devices and a peak time to provide electricity charge time period information, and also, display a message such as "power saving mode performing" to provide an operation mode.

The driving unit 240 receives a control signal from the control unit 210 to drive loads required for operating the refrigerator. For example, the driving unit 240 drives the compressor 242 to supply cool air into the refrigerator. The cool air is generated by heat-exchange of refrigerant. Here, a cycle of compression- condensation-expansion-evaporation is repeatedly performed to continuously supply the cool air into the refrigerator. The supplied cool air may be uniformly distributed into the refrigerator by a convection to store foods within the refrigerator at a desired temperature. Also, the driving unit 240 drives the evaporator 244 to allow a low-temperature liquid refrigerant to absorb ambient heat, thereby generating a low-pressure high-temperature refrigerant. Here, the absorbed heat is vaporized.

The control unit 210 outputs the control signal into the driving unit 240 to control a defrosting operation time of the defrosting heater 246. Here, the defrosting operation time is divided into a first defrosting operation time and a second defrosting operation time, which are minimum defrosting times required for operating the refrigerator.

Although an operation of the defrosting heater is described below, the ides of the present embodiment may be applicable to other components such as the compressor and the motor.

Figs. 13 to 15 are views for explaining a process in which a refrigerator performs a defrosting operation in a power saving mode according to a first embodiment.

First, as shown in Fig. 13A, when a time for starting a defrosting operation and a total defrosting operation time are within a peak time period, as shown in Fig. 13B, the defrosting operation is performed only for a minimum critical defrosting time of the total defrosting operation time. Then, when the peak time period is ended (i.e., enter into a normal time period), the defrosting operation is performed for a remaining defrosting operation time.

That is to say, the total defrosting operation time is divided into a first defrosting operation time and a second defrosting operation time. The defrosting operation is performed within the peak time period for the first defrosting operation time. Then, an operation of the defrosting heater 246 is stopped up to a time point at which the peak time period is ended, and the defrosting operation is performed within the normal time period for the second defrosting operation time.

Here, the first defrosting operation time is a minimum critical defrosting time, i.e., a minimum defrosting time within a range in which an operation of the refrigerator or reliability of the refrigerator itself is not affected. The first defrosting operation time may be set at a predetermined ratio, e.g., about 20% of the total defrosting operation time.

As shown in Fig. 14A, when a defrosting operation starting time is within the normal time period, but the total defrosting operation time extends from the normal time period to the peak time period, as shown in Fig. 14B, the defrosting operation performable within the normal time period is performed, and the operation of the defrosting heater is stopped for the peak time period. Then, when the peak time period is ended and the normal time period starts again, the defrosting operation is performed for a remaining defrosting operation time. That is, the total defrosting operation time is divided into the first defrosting operation time and the second defrosting operation time. Then, when the defrosting operation is performable within the normal time period for the first defrosting operation time, the defrosting operation is performed. Also, the defrosting operation is performed for a time, which is performable within the normal time period of the second defrosting operation time. Then, the defrosting operation is performed for a remaining defrosting operation time, which is not performed yet when the peak time period is ended and the normal time period starts again.

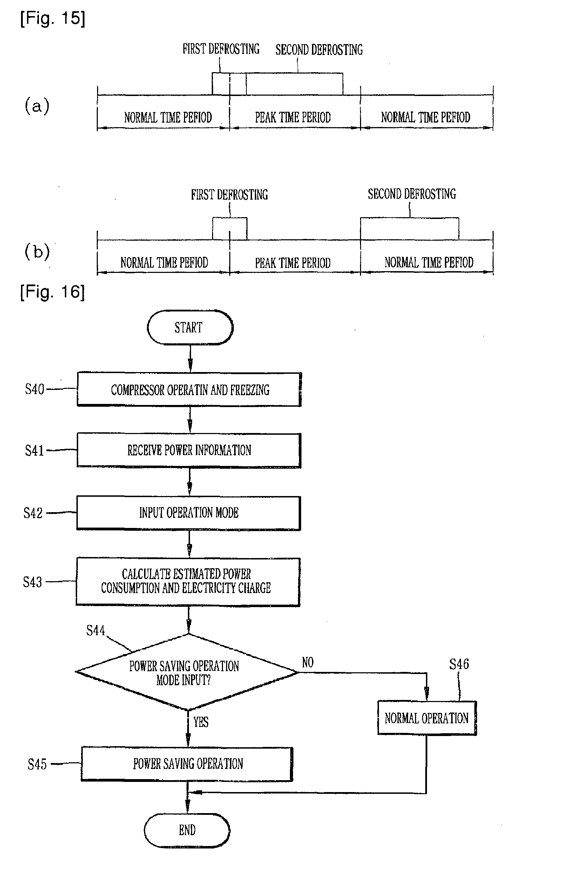

As shown in Fig. 15A, when the defrosting operation starting time is within the normal time period, but the first defrosting operation time extends from the normal time period to the peak time period, as shown in Fig. 15B, the defrosting operation is performed for the first defrosting operation time, and then the operation of the defrosting heater is stopped. Here, the first defrosting operation is performed also in the peak time period. Then, when the peak time period is ended and the normal time period starts again, the defrosting operation is performed for the second defrosting operation time.

The power information further includes a kind of external power source and a greenhouse gas index depending on the kind of external power source. The control unit 210 may calculate estimated power consumption and a greenhouse gas emission amount, based on the power information. The output unit may further display at least one or more information of the kind of external power source, the greenhouse gas index, and the greenhouse gas emission amount. Also, the control unit 210 may calculate an estimated greenhouse gas emission amount of an energy source supplied into a refrigerator, based on the calculated estimation power consumption. Since the description with respect to the washing machine may be applicable to the refrigerator, detailed descriptions will be omitted.

Fig. 16 is a flowchart for explaining a process of controlling the refrigerator according to the first embodiment.

Referring to Fig. 16, when a refrigerator is turned on, a compressor is operated to generate cool air in operation S40. In operation S41, power information including electricity charge time period information having a normal time period and a peak time period is received from an external device. In operation S42, an operation mode is inputted by a user. Here, the input of the operation mode may be performed before the operation S41.

Then, in operation S43, estimated power consumption depending on the operation mode and an estimated electricity charge depending on the power consumption are calculated based on the power information to display the estimated power consumption and the estimated electricity charge. Then, in operation S44, whether an inputted mode is a power saving operation mode is determined. If the inputted mode is the power saving operation mode, the refrigerator is operated in the power saving operation mode in operation S45. Also, if the inputted mode is a normal operation mode, the refrigerator is operated in the normal operation mode in operation S46. Here, when the received power information is within a normal time period, the refrigerator is operated in the normal operation mode. Also, when the inputted power information is within a peak time period, the refrigerator is operated in the set operation mode. That is, when a user sets the normal operation mode, the refrigerator is operated in the normal operation mode even though power information that is the peak time period is received.

On the other hand, in case where the user set the power saving operation mode, the refrigerator is operated in the power saving operation mode when power information that is the peak time period is received. As necessary, the operation mode may be automatically switched according to a voluntary condition.

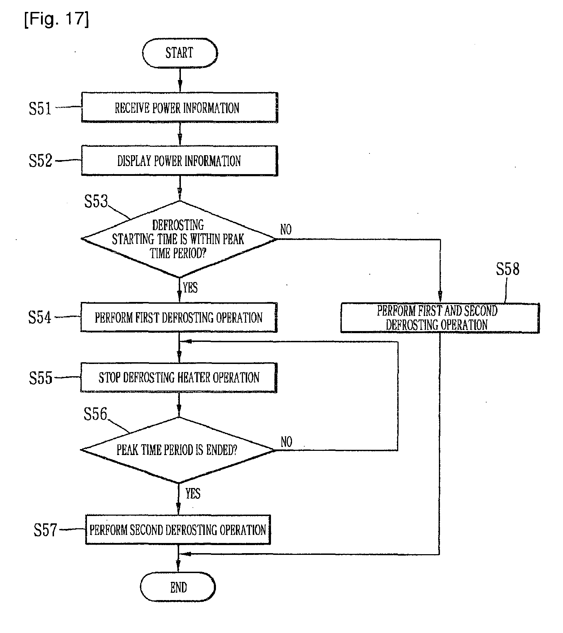

Fig. 17 is a view for explaining a first example of a process of operating the refrigerator in the power saving mode.

Referring to Figs. 13 and 17, the refrigerator receives power information in operation S51 to display the received power information in operation S52. Then, in operation S53, whether a defrosting operation starting time is within the peak time period is determined. If the defrosting operation starting time is within the peak time period, the first defrosting operation is performed in operation S54. Then, in operation S55, an operation of the defrosting heater is stopped. Here, a defrosting operation period changed according to the stop of the operation of the defrosting heater may be displayed. In operation S56, whether the peak time period is ended is determined. When the peak time period is ended, the second defrosting operation is performed in operation S57. On the other hand, when the defrosting operation starting time is within the normal time period, the first and second defrosting operations are performed in operation S58.

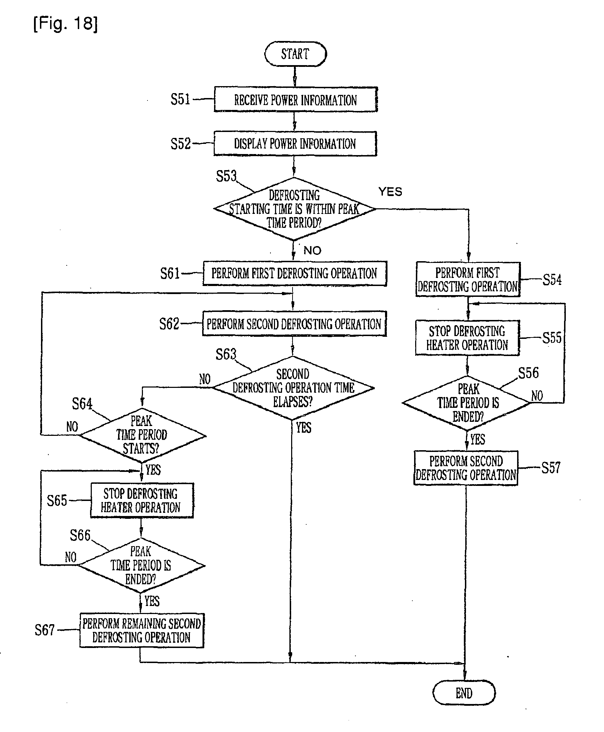

Fig. 18 is a view for explaining a second example of the process of operating the refrigerator in the power saving mode.

Referring to Figs. 14 and 18, the refrigerator receives power information in operation S51 to display the received power information in operation S52. Then, in operation S53, whether a defrosting operation starting time is within the peak time period is determined. If the defrosting operation starting time is within the normal time period, the first defrosting operation is performed in operation S61 and the second defrosting operation is performed in operation S62 (corresponding to case where a portion of the second defrosting operation time is included in the normal time period).

Then, during the second defrosting operation, whether the peak time period starts is determined in operation S64. As the determined result, when the peak time period starts, the operation of the defrosting heater is stopped to stop the second defrosting operation in operation S65. In operation S66, whether the peak time period is ended in a state where the second defrosting operation is stopped is determined. Then, when it is determined that the peak time period is ended (the normal time period starts), a remaining second defrosting operation is performed in operation S67.

As the result determined in operation S60, when the defrosting operation starting time is within the peak time period, the defrosting operation is performed within the peak time period for the first defrosting operation time in operation S54. Then, in operation S55, an operation of the defrosting heater is stopped. When the operation of the defrosting heater is stopped, whether the peak time period is ended is determined in operation S56. When the peak time period is ended, the defrosting operation is performed within the normal time period for the second defrosting operation time in operation S57.

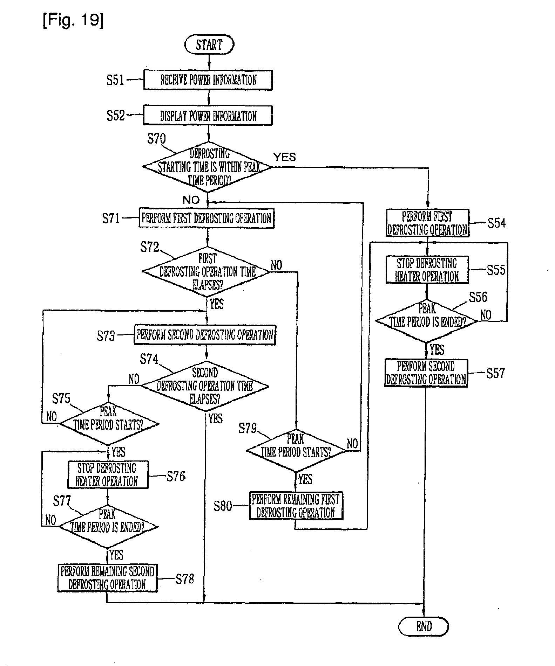

Fig. 19 is a view for explaining a third example of the process of operating the refrigerator in the power saving mode.

Referring to Figs. 15 and 19, the refrigerator receives power information in operation S51 to display the received power information in operation S52. Then, in operation S70, whether a defrosting operation starting time is within the peak time period is determined. If the defrosting operation starting time is within the normal time period, the first defrosting operation is performed in operation S71. During the first defrosting operation, when the first defrosting operation enters into the peak time period, only the first defrosting operation is operated in operation S80, and an operation of the defrosting heater is stopped in operation S55. When the peak time period is ended, the second defrosting operation is performed in operation S57. On the other hand, when the first defrosting operation does not enter into the peak time period until the first defrosting operation is stopped, the second defrosting operation is performed in operation S73. Then, during the second defrosting operation, whether the second defrosting operation enters into the peak time period is determined in operation S75. When the peak time period starts during the second defrosting operation, an operation of the defrosting heater is stopped to stop the second defrosting operation in operation S76. When the peak time period is ended, the defrosting operation is performed for a remaining second defrosting operation in operations S77 and S78.

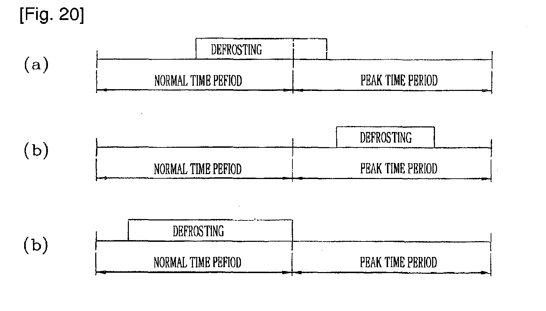

Figs. 20 to 22 are views for explaining a process in which a refrigerator performs a defrosting operating in a power saving mode according to a second embodiment.

When the total defrosting operation time extends from the normal time period to the peak time period as shown in Fig. 20A or the entire defrosting operation should be performed within the peak time period as shown in Fig. 20B, the total defrosting operation time is put forward to perform the entire defrosting operation within the normal time period. That is, a starting time and an ending time of the normal time period and the peak time period are received through the communication unit 212. When the current time is within the normal time period and the defrosting operation is completed before the normal time period is ended, the defrosting operation starting time is put forward to perform the defrosting operation within normal time period.

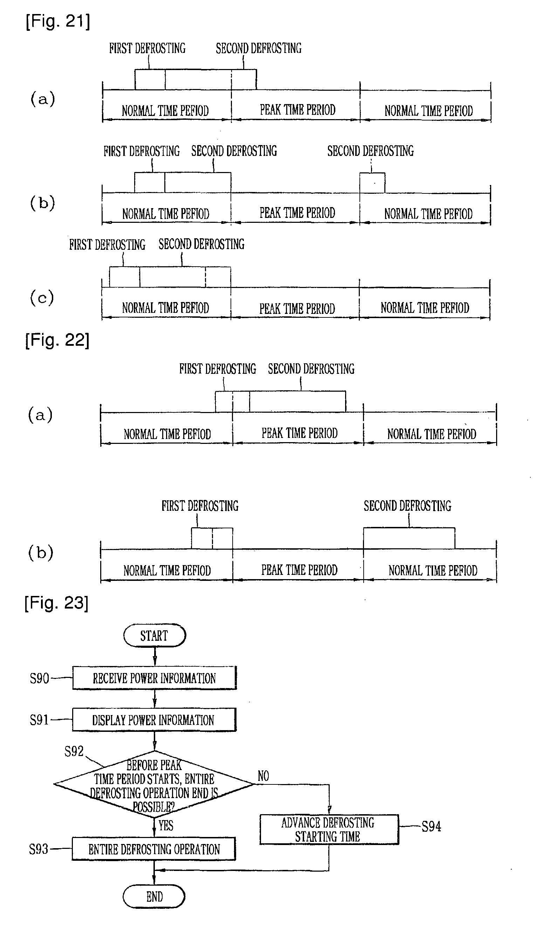

As shown in Fig. 21A, when a defrosting operation starting time is within the normal time period, but the total defrosting operation time extends from the normal time period through the peak time period, as shown in Fig. 21B, the defrosting operation performable within the normal time period is performed, and the operation of the defrosting heater is stopped for the peak time period. Then, when the peak time period is ended and the normal time period starts again, the defrosting operation is performed for a remaining defrosting operation time. That is, the total defrosting operation time is divided into the first defrosting operation time and the second defrosting operation time. Then, when the defrosting operation is performable within the normal time period for the first defrosting operation time, the defrosting operation is performed. Also, the defrosting operation is performed for a time, which is performable within the normal time period of the second defrosting operation time. Then, the defrosting operation is performed for a remaining defrosting operation time, which is not performed yet when the peak time period is ended and the normal time period starts again.

In case of Fig. 21A, when it is determined that the defrosting operation does not start and the entire defrosting operation is performable within the normal time period, the control device, as shown in Fig. 21C, the total defrosting operation time is put forward within the normal time period to perform the defrosting operation within the normal time period. That is, when it is determined that the current time is included in the normal time period and the defrosting operation is completed before the normal time period is ended, the defrosting operation starting time is put forward to perform the defrosting operation within the normal time period. Here, the defrosting operation ending time is equal to or earlier than the starting time of the peak time period.

As shown in Fig. 22A, when the first defrosting operation time extends from the normal time period to the peak time period, as shown in Fig. 22B, the first defrosting operation time is put forward to the normal time period to perform the first defrosting operation and to stop an operation of the defrosting heater. Then, when the peak time period is ended and the normal time period starts again, the defrosting operation is performed for the second defrosting operation time.

Fig. 23 is a view for explaining a fourth example of the process of operating the refrigerator in the power saving mode.

Referring to Fig. 23, the refrigerator receives power information in operation S90 to display the received power information in operation S91. Then, in operation S92, whether the entire defrosting operation is performable before the peak time period starts is determined. If the entire defrosting operation is performable before the peak time period starts, the entire defrosting operation is performed in operation S93. On the other hand, if the entire defrosting operation is not performable before the peak time period starts, a staring time of the defrosting operation is put forward to perform the entire defrosting operation within the normal time period. That is, when it is determined that the current time is included in the normal time period and the defrosting operation is completed before the normal time period is ended, the defrosting operation starting time is put forward to perform the defrosting operation in operation S94.

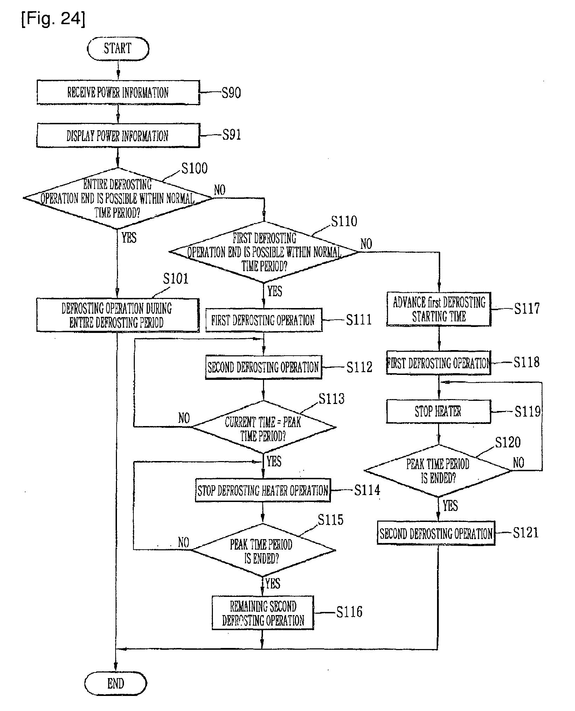

Fig. 24 is a view for explaining a fifth example of the process of operating the refrigerator in the power saving mode.

Referring to Fig. 24, the refrigerator receives power information in operation 90 to display the received power information in operation S91. Then, in operation S100, whether the entire defrosting operation is performable within a normal time period is determined. If the entire defrosting operation is performable within the normal time period, the defrosting operation is performed in operation S101.

On the other hand, if the entire defrosting operation is not performable within the normal time period, whether a first defrosting operation is performable within the normal time period is determined in operation S110. As a result, if the first defrosting operation is not performable, a starting time of the first defrosting operation is put forward in operation S 117. The first defrosting operation is performed at the advanced time in operation S 118. When the first defrosting operation is completed, a defrosting heater is stopped in operation S 119. Then, in operation S120, whether a peak time period is ended is determined. When the peak time period is ended, a second defrosting operation is performed in operation S121.

As the result determined in operation S110, when the first defrosting operation is performable within the normal time period, the first defrosting operation is performed in operation S111. Then, in operation S 112, the second defrosting operation starts after the first defrosting operation is completed. In operation S113, whether the peak time period comes during the second defrosting operation is determined. When the peak time period comes, an operation of the defrosting heater is stopped in operation S 114. In operation S 115, whether the peak time period is ended is determined. When the peak time period is ended, a remaining second defrosting operation is performed in operation S116.

According to the foregoing five embodiments, when at least portion of the peak time period is included in the total defrosting operation time, the total defrosting operation time is maintained. However, the defrosting operation time period (the starting or ending time of the deforesting operation or a distance between the starting and ending times of the deforesting operation) is changed.

As described above, since the electric product itself or parts (for example, the fan, the motor, the compressor, the heater, the display, and the control part) constituting the electric product are operated by consuming electricity, they may be called an energy consumption component.

Although embodiments have been described with reference to a number of illustrative embodiments thereof, it should be understood that numerous other modifications and embodiments can be devised by those skilled in the art without departing from the scope of the present invention as defined in the appended claims.

## Claims

1. A method of controlling a network system, the method comprising:
recognizing power information comprising a peak time period and an operation time period of an energy consumption component (100); and
changing the operation time period when the peak time period is included in at least a portion of the operation time period of the energy consumption component,
**characterized in that** the changing the operation time period comprises dividing the operation time period into a plurality of time periods, and
the plurality of periods comprises a first time period existing before start of a peak time and a second time period existing after end of the peak time.

2. The method according to claim 1, wherein the operation times before and after changing the operation time period are equal to each other.

3. The method according to claim 1, wherein the operation time period is defined by an operation starting time and operation ending time of the energy consumption component (100).

4. The method according to claim 1, wherein the energy consumption component (100) is non-operated in at least portion of the peak time period.

5. The method according to claim 4, wherein the operation of the energy consumption component is immediately stopped when the peak time comes during the operation of the energy consumption component.

6. The method according to claim 4, wherein the non-operated energy consumption component is re-operated when the peak time period is ended.

7. The method according to claim 1, wherein the changing the operation time period comprises that the entire operation time period is changed.

8. The method according to claim 1, wherein the changing the operation time period comprises that a portion of the operation time period is changed.

9. The method according to claim 1, wherein an ending time of the changed operation time period is disposed in a normal time period, which comes after the peak time.

10. The method according to claim 1, further comprising displaying the changed operation time period.

11. The method according to claim 1, wherein the energy consumption component is an electric product or a part constituting the electric product.

## Patentansprüche

1. Verfahren zum Steuern eines Netzsystems, wobei das Verfahren umfasst:
Erkennen von Leistungsinformationen, die eine Zeitspanne höchster Belastung und eine Betriebszeitspanne einer Energieverbrauchskomponente (100) umfassen; und
Ändern der Betriebszeitspanne, wenn die Zeitspanne höchster Belastung in mindestens einem Teil der Betriebszeitspanne der Energieverbrauchskomponente enthalten ist,
**dadurch gekennzeichnet, dass** das Ändern der Betriebszeitspanne umfasst, die Betriebszeitspanne in mehrere Zeitspannen zu unterteilen, und
die mehreren Zeitspannen eine erste Zeitspanne, die vor dem Beginn einer Zeit höchster Belastung existiert, und eine zweite Zeitspanne, die nach dem Ende der Zeit höchster Belastung existiert, umfasst.

2. Verfahren nach Anspruch 1, wobei die Betriebszeiten vor und nach dem Ändern der Betriebszeitspanne gleich sind.

3. Verfahren nach Anspruch 1, wobei die Betriebszeitspanne durch eine Betriebsstartzeit und eine Betriebsendzeit der Energieverbrauchskomponente (100) definiert ist.

4. Verfahren nach Anspruch 1, wobei die Energieverbrauchskomponente (100) zumindest in einem Teil der Zeitspanne höchster Belastung nicht betrieben wird.

5. Verfahren nach Anspruch 4, wobei der Betrieb der Energieverbrauchskomponente sofort angehalten wird, wenn die Zeit höchster Belastung während des Betriebs der Energieverbrauchskomponente kommt.

6. Verfahren nach Anspruch 4, wobei die nicht betriebene Energieverbrauchskomponente wieder betrieben wird, wenn die Zeitspanne höchster Belastung beendet ist.

7. Verfahren nach Anspruch 1, wobei das Ändern der Betriebszeitspanne umfasst, dass die gesamte Betriebszeitspanne geändert wird.

8. Verfahren nach Anspruch 1, wobei das Ändern der Betliebszeitspanne umfasst, dass ein Teil der Betriebszeitspanne geändert wird.

9. Verfahren nach Anspruch 1, wobei eine Endzeit der geänderten Betriebszeitspanne in einer normalen Zeitspanne angeordnet ist, die nach der Zeit höchster Belastung kommt.

10. Verfahren nach Anspruch 1, das ferner umfasst, die geänderte Betriebszeitspanne anzuzeigen.

11. Verfahren nach Anspruch 1, wobei die Energieverbrauchskomponente ein elektrisches Produkt oder ein Teil, das das elektrische Produkt bildet, ist.

## Revendications

1. Procédé de commande d'un système de réseau, le procédé comprenant :
la reconnaissance d'informations de puissance comprenant une période d'heures de pointe et une période d'heures de fonctionnement d'un composant de consommation d'énergie (100) ; et
le changement de la période d'heures de fonctionnement lorsque la période d'heures de pointe est incluse dans au moins une portion de la période d'heures de fonctionnement du composant de consommation d'énergie,
**caractérisé en ce que** le changement de la période d'heures de fonctionnement comprend la division de la période d'heures de fonctionnement en une pluralité de période d'heures, et
la pluralité de période comprend une première période d'heures existant avant le début des heures de pointe et une deuxième période d'heures existant après la fin des heures de pointe.

2. Procédé selon la revendication 1, dans lequel les heures de fonctionnement avant et après le changement de la période d'heures de fonctionnement sont identiques.

3. Procédé selon la revendication 1, dans lequel la période d'heures de fonctionnement est définie par une heure de début de fonctionnement et une heure de fin de fonctionnement du composant de consommation d'énergie (100).

4. Procédé selon la revendication 1, dans lequel le composant de consommation d'énergie (100) n'est pas en fonctionnement dans au moins une portion de la période d'heures de pointe.

5. Procédé selon la revendication 4, dans lequel le fonctionnement du composant de consommation d'énergie est immédiatement arrêté lorsque les heures de pointe sont pendant le fonctionnement du composant de consommation d'énergie.

6. Procédé selon la revendication 4, dans lequel le composant de consommation d'énergie qui n'est pas en fonctionnement est remis en fonctionnement lorsque la période d'heures de pointe est terminée.

7. Procédé selon la revendication 1, dans lequel le changement de la période d'heures de fonctionnement comprend le changement de toute la période d'heures de fonctionnement.

8. Procédé selon la revendication 1, dans lequel le changement de la période d'heures de fonctionnement comprend le changement d'une portion de la période d'heures de fonctionnement.

9. Procédé selon la revendication 1, dans lequel une heure de fin de la période d'heures de fonctionnement changée est disposée dans une période d'heures normales qui vient après les heures de pointe.

10. Procédé selon la revendication 1, comprenant en outre l'affichage de la période d'heures de fonctionnement changée.

11. Procédé selon la revendication 1, dans lequel le composant de consommation d'énergie est un produit électrique ou une pièce constituant le produit électrique.
